# EUROPEAN PATENT APPLICATION

(11) **EP 0 691 485 A1**
(43) Date of publication of application: **10.01.1996**
(21) Application number: 95201875.2
(22) Date of filing: 07.07.1995
(51) Int. Cl.: F16D 65/092

(54) **Pads for disc brakes**

(30) Priority: 08.07.1994 IT TO940150 U
(71) Applicant: Ferodo Italiana S.p.A., I-12085 Mondovi (CN) (IT)
(72) Inventor: Borghese, Dario, Mondovi (Cuneo) (IT); Ambrogio, Guido, Mondovi (Cuneo) (IT)
(74) Representative: Gibson, George Kevin

(57) **Abstract**

Pads (2) for disc brakes each have bodies (5) of friction material which protrude from a backplate through apertures (7) in a first constituent plate (4) and away from a second constituent plate (18) of the backplate, and are secured between the first plate (4) and the second plate (18), and the second plate (18) is rigidly connected to the first plate (4). In accordance with the present invention, the backplate has a plurality of integral flanges (20) each to engage an aperture (21) in a co-operating support and movement unit (3) for the pads (2), for example, forming a dovetail joint therewith. When the backplate comprises first and second constituent plates (4,18), the flanges (20) are integral with the second plate (18) and extend away from the first plate (4) and the bodies (5) of friction material.

## Description

The present invention applies to pads for disc brakes, especially, but not exclusively, in the field of railway vehicles in general, and in the field of railway vehicles intended for use at high speeds in particular.

For the braking of railway vehicles it is known that pads are used of a type in which each includes a plurality of bodies of sintered friction material, a backplate for said bodies, fastening means for rigidly mounting each of the said bodies on said backplate, and connecting means suitable for allowing connection of the backplate to a co-operating support and movement unit for the pads.

The backplate usually is connected to the support unit by means of an elongated solid member which has, in cross-section, a dovetail shape, and is suitable for positively engaging a co-operating seating provided by the support unit to form a dovetail coupling. The elongated member is secured to the backplate by means of welding points or, alternatively, by means of rivetting.

The known pads of the type described above, in use, suffer from the main drawback of having a relatively low functional reliability. This is essentially due to the particular method of, and to the means for, connecting the elongated member to the co-operating support unit, which, by the fact of the elongated member having a transverse dimension markedly smaller in comparison with its lengthwise dimension, and being substantially smaller in comparison with the corresponding dimensions of the backplate, is connected solely to a central portion of the said backplate. For this reason, the connection between the elongated member to the backplate is not, normally, stable and, especially is not suitable to operate in the presence of loads which are not only high but also variable.

Further, the braking efficiency of the known pads, although satisfactory manner when dry, have, on the contrary, a relatively reduced braking effect, and are barely satisfactory, when they work in the wet, or in the presence of a lubricating fluid which is normally water, because of the difficulty in removing the water.

The known pads also suffer from the inconvenience of being a source of high acoustic emissions, which considerably limit their field of application.

The purpose of the present invention is to achieve pads for disc brakes for vehicles which allow them to remedy, in a simple and economical manner, the disadvantages set out above, and have, especially, with regard to the known pads, a high degree of reliability, braking efficiency, and a low acoustic emission.

According to the present invention, pads for disc brakes each includes a plurality of bodies of friction material, a backplate to which the bodies are secured, and connecting means suitable to allow connection of the backplate to a co-operating support and movement unit for the pads, characterised in that the said connecting means comprises a plurality of flanges integral with at least part of said backplate, the flanges protruding from, and being inclined at an angle other than a right angle to the general plane of the backplate, each flange being suitable for engaging positively and in a reliable manner in an aperture in the said co-operating support unit.

The backplate may comprise a first, constituent plate, a second, constituent, fastener plate, and means for securing the two plates rigidly together, the flanges of the connecting means being integral with the second plate, and extending beyond the general plane of the second plate away from the first plate and the bodies of friction material.

The invention will now be described with reference to the attached illustrations which show one non-limitative example of an embodiment, in which:
Figure 1 is an exploded view of one preferred form of embodiment of a disc brake pad according to the present invention;
Figure 2 is a plan view of a disc brake block formed from a pair of pads according to the present invention;
Figure 3 is a section, on an enlarged scale, along the line III-III in Figure 2; an
Figure 4 shows, in cross-section, a detail of Figure 3.

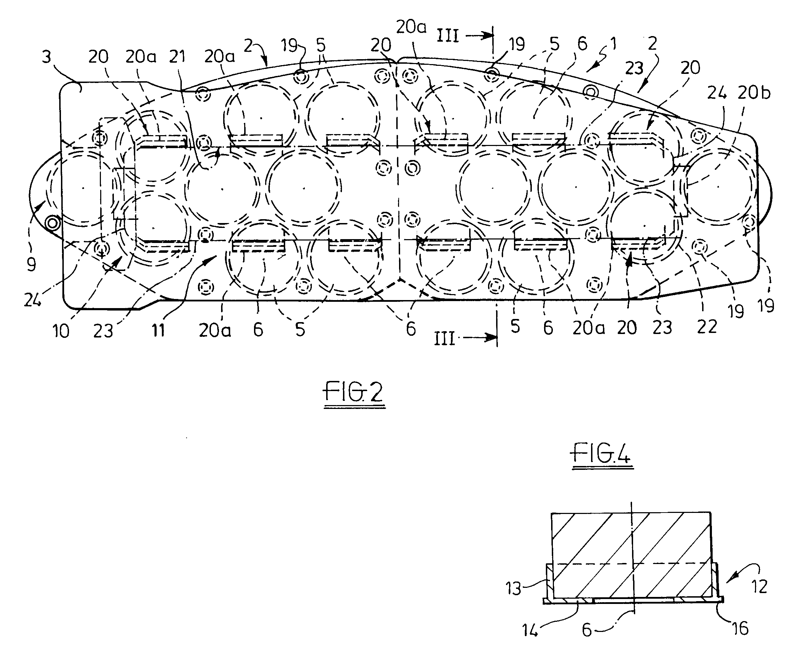

In Figures 2 and 3, 1 indicates a disc brake block. The block 1 comprises a pair of pads 2 brought together and opposite each other in a circumferential direction. The block 1 is connected in a reliable manner to a known support unit 3 intended, in its turn, to be joined to an actuating element, known and not illustrated, for moving the said block 1 away from and towards a brake disc (not shown).

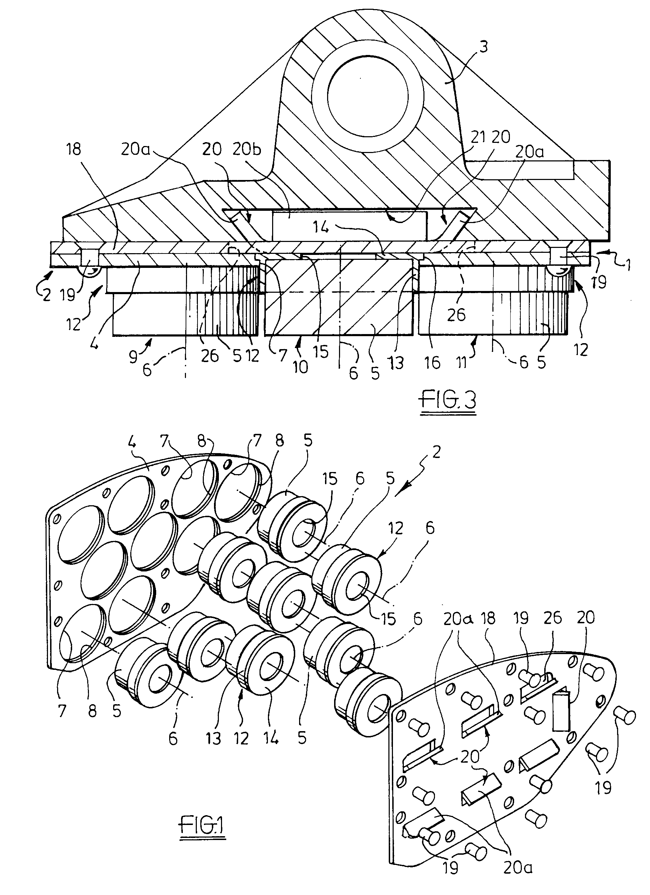

With reference to Figure 3 and, in particular, to Figure 1, each pad 2 includes a first constituent plate 4 of a backplate for the pad, and a plurality of cylindrical bodies 5 which are secured to the backplate, which are made of sintered friction material, and have respective axes 6 parallel to each other and orthogonal to the said backplate.

The first plate 4 is provided with a plurality of holes 7, and within each of such holes 7, an annular seating 8 coaxial with the relevant hole 7, and provided in the first plate 4 by a larger diameter portion of the hole 7 which delimits the axial length of the smaller diameter portion of the hole 7.

The bodies 5 extend through the respective holes 7, which, as can be seen from Figure 2, are made in positions by which the bodies 5 are distributed in three rows 9, 10 and 11 in a substantially circumferential pattern. Row 9 extends to an external peripheral portion of the brake disc (not shown), and comprises a larger number of bodies 5 than those of the other two rows. Furthermore, the holes 7 are in positions so that the bodies 5 are arranged adjacent to each other with their axes 6 passing through the apices of respective equilateral triangles.

Each of the cylindrical bodies 5 is joined to the backplate by means of a body 12 (Figure 4), which body 12 accommodates an end portion of the cylindrical body 5, and comprises a wall 13 on a flat base 14. The wall 13 is a close fit in the smaller diameter portion of the co-operating hole 7. The flat base 14 is provided with a central aperture 15, and is integral with an external flange 16 which extends beyond the wall 13 to engage the co-operating seating 8 within the hole 7.

The flanges 16 of the bodies 12 are kept in engagement with the co-operating seats 8 by a second constituent plate 18 of the backplate, and which is geometrically and dimensionally equal to the first plate 4, and is firmly connected to the said first plate 4 by means of a crown of rivets 19 extending through the respective portions of the perimeters of the said first and second plates.

With reference to Figure 1 and, in particular, to Figure 3, the second plate 18 has a multiplicity of integral flanges 20, each of which is made directly from the plate 18 by punching or, alternatively, by means of cutting and successive bending, and protrudes from the general plane of the second plate 18 away from both the first plate 4 and the cylindrical bodies 5 in order to engage positively and in a reliable manner, a seating provided by a dove-tailed shaped aperture 21 in the unit 3.

As shown in Figure 2, the flanges 20 are distributed along, and partially define, a generally U-shaped channel 22, the channel 22 consisting of two straight and parallel sections 23, and two transverse end sections 24. Along each of the straight sections 23 there is a plurality of spaced main flanges 20a, and each main flange 20a is directly opposite to a corresponding main flange 20a, arranged along the other section 23. The main flanges 20a form a dovetail joint with the aperture 21 in the unit 3. Along each end section 24 there is a second flange 20b, intended to co-operate with the aperture 21 in order to prevent, in use, the sliding of the main flanges 20a inside the said aperture 21.

The positions of each of the flanges 20 along the U-shaped channel is selected in such a way that each flange 20 extends substantially in register with the flat base 14 of at least one of the flanged bodies 12. Thus, the flanges 20 provide local stiffening of the second plate 18 beneath the corresponding cylindrical bodies 12. The provision of the flanges 20 produces in the second plate 18 a plurality of apertures 26 (Figure 3), in alignment with the apertures 15 of the flanged bodies 12.

Hence, each pad 2 described above has a high degree of functional reliability, which is derived essentially from the particular method by which the backplate 4, 18 is joined to the supporting unit 3. The U-shaped channel advantageously has a larger transverse dimension in comparison with its lengthwise dimension than in known pads having a solid elongated member. Thus, in contrast to known pads, in each pad 2 in accordance with the present invention the presence of a plurality of integral flanges 20 on a second, fastener plate 18, allows the firm connection of the said pad 2 to the unit 3. In particular, the flanges 20 allow the achievement of a connection which is practically insensitive not only to the variation in the operating conditions of the pads, but, above all, to the wearing effect of vibrations, and of the load peaks, to which the pads normally are subject.

The pads 2 described have, furthermore, a high degree of functional efficiency, which is essentially derived from the particular arrangement of the bodies 5 on the plate 4. In particular, a substantial number of bodies 5 is concentrated in a circumferential zone of the backplate, arranged, in use, in positions facing an external peripheral portion of the brake disc (not illustrated).

Moreover, in order to improve the behaviour of the pads when wet, because the bodies 5 are positioned with their axes 6 arranged at the apices of equilateral triangles, such an arrangement, in any operating conditions, allows an effective ventilation of the bodies 5 with a strong dispersion of the heat generated, and, during braking in the presence of water, an easy and immediate evacuation of water is provided between the pad and the disc, and a consequent rise in the coefficient of friction when wet between the parts in relative motion to each other.

Further, in the pads 2 described, the bodies 5 are subjected to heat gradients which are notably reduced in comparison with the heat gradients to which the bodies of the known pads are subject, since, following the forming of the flanges 20, a plurality of apertures 26 are made on the second plate 18, each aperture 26 being in alignment with an aperture 15 in the base 14 of a related flanged body 12, together creating a ventilation channel for the corresponding cylindrical body 5.

Because of the provision of the flanges 20, and their arrangement, the described pads 2 have, in comparison with the known pads, a reduced acoustic emission.

The particular described method of attaching the bodies 5 to the plate 4 makes it possible to reduce the times of assembly, in comparison with the known pads, and, above all, to reduce the costs of manufacture, since the assembly of such pads 2 does not require the use of special equipment.

From the above, it appears evident that modifications and variants can be made to the described pads 2, and these modifications and variants do not lie outside the scope of protection of the present invention.

In particular, it is possible either for the number or the arrangement of the flanges 20 to be varied. It is not essential that a dove-tailed connection is formed between the pads and the co-operating support unit 3. Further, it is possible to vary the number, geometry and arrangement of the bodies 5. Moreover, the bodies 5 could be joined to the backplate in a different manner from the one described, and, in particular, by means of attachment elements different from the plate 18, and the flanges 20 could be integral to the said attachment elements.

Finally, the plates 4 and 18 could be connected to each other in a different manner from that described and, in particular, by welding.

## Claims

1. Pads (2) for disc brakes each including a plurality of bodies (5) of friction material, a backplate (4,18) to which the bodies (5) are secured, and connecting means (20) suitable for allowing connection of the backplate (4,18) to a cooperating support and movement unit (3) of the pads (2), characterised in that the said connecting means (20) comprises a plurality of flanges integral with at least part of said backplate (4,18), the flanges protruding from, and being inclined at an angle other than a right angle to the general plane of the backplate (4,18); each flange (20) being suitable for engaging positively and in a reliable manner in an aperture (21) in the said co-operating support unit (3).

2. Pads according to claim 1, characterised in that at least some (20a) of the flanges (20) are aligned along two directions (23) substantially parallel to each other.

3. Pads according to claim 2, characterised in that said at least some of the flanges (20a) form a dovetail joint with an aperture 21 in the co-operating unit (3).

4. Pads according to claim 2, or claim 3, characterised in that said at least some flanges (20a) are arranged along the two said parallel directions (23) in directly opposing pairs.

5. Pads according to claim 2, or claim 3, or claim 4, characterised in that said at least some flanges (20a) are spaced apart along said two parallel directions (23).

6. Pads according to any one of the preceding claims, characterised in that each of the said flanges (20) extends substantially in register with a related body (5) of friction material.

7. Pads according to any one of the preceding claims, characterised in that each of the said flanges (20) is made by punching.

8. Pads according to any one of the preceding claims, characterised in that the backplate comprises a first, constituent plate (4), a second, constituent, fastener plate (18), and means 19 for securing the two plates rigidly together, the flanges (20) of the connecting means being integral with the second plate (18), and extending beyond the general plane of the second plate (18) away from the first plate (4) and the bodies (5) of friction material.

9. Pads according to claim 8, characterised in that the said first and second plates of the backplate are at least substantially geometrically and dimensionally the same as each other, and the said means (19) secures together respective peripheral portions of the said plates (4,18).

10. Pads according to claim 8, or claim 9, characterized in that the said first plate (4) has a plurality of apertures (7), and each of the plurality of bodies (5) of friction material is mounted in a body (12), each body (12) extends through an aperture (7) in the first plate (4), and is rigidly secured between the first (4) and second (18) plates of the backplate.

11. Pads according to claim 10, characterized in that said first plate (4) of the backplate has, within each aperture (7) a seating (8), and each body (12) has an integral flange (16) engaging a said related seating (8).

12. Pads according to any one of the preceding claims, characterised in that the said bodies (5) of friction material have respective axes (6) passing through the apices of related equilateral triangles.
